Europäisches Patentamt

European Patent Office

Office européen des brevets

(11) Publication number: **0 312 721**
A1

# (12) EUROPEAN PATENT APPLICATION

(21) Application number: 88112856.5

(22) Date of filing: 06.08.88

(51) Int. Cl.⁴: **B65G 33/02** , **B65G 33/26** , //B65G23/20

(30) Priority: 29.09.87 GB 8722851

(43) Date of publication of application:
26.04.89 Bulletin 89/17

(84) Designated Contracting States:
AT BE CH DE ES FR GB GR IT LI LU NL SE

(71) Applicant: STOCKRAIL LIMITED
Frost Hill Liversedge
West Yorkshire, WF15 6AU(GB)

(72) Inventor: Duce, Edward
1 Kirkland Off Knowler Hill
Liversedge West Yorkshire(GB)

(74) Representative: Denmark, James
c/o Bailey, Walsh & Co. 5 York Place
Leeds LS1 2SD Yorkshire(GB)

(54) Conveyor scroll.

(57) The invention comprises a scroll spindle (10A, 10B) comprises an outer sleeve (26A, 26B) of plastics material in or by which the threads (32A, 32B) of the scroll spindle (10A, 10B) are defined, and a central spine (28A, 28B) of a torsion resistant material such as steel, whereby such spindle arrangement can be used in a drive application enabling longer spindle lengths to be used.

EP 0 312 721 A1

FIG. 2

## Improvements Relating to Scroll Drives.

This invention relates to scroll drives, and in particular concerns a spindle having on its outer surface a scroll whereby the spindle can be used for the propelling of for example garment hangers suspended thereon or suspended on a slide rail.

Such scroll spindles are used extensively in the transportation of suspended articles either by using hangers such as garment hangers or specially adapted hangers, or other devices such as devices known as "sets". A set comprises a framework with a pair of hooks thereon, and the hooks in use are traditionally hooked over the scroll spindle between spaced threads. When a scroll spindle supports one of these sets, it acts in much the same fashion as it does when it supports a garment hanger. The purpose of using a scroll spindle in such application is that when the spindle is rotated, by virtue of the hooks engaging between the threads, the hooks are propelled lengthwise of the spindle depending upon the direction of rotation, and of course any article supported by the hanger or set is propelled lengthwise of the spindle. Such spindles are used as indicated above in locations such as garment storage and sortation factories, but they are also used in other factories where articles have to be suspended typically from an overhead location, and propelled under power from place to place within the factory or indeed from a location inside the factory to a location externally of the factory, for example into a transportation vehicle or container. Scroll spindles can also be used for propelling hangers or other devices from above or to the side of support rails on which the hangers or other devices are suspended.

Typically, the scroll spindles used heretofore have comprised plastic mouldings or plastic extrusions duly machined to define the screw thread, and a problem which has been encountered when endeavouring to drive such spindle, especially when the spindles are of long length i.e. of 10 m or more is that when the spindle is loaded with the hangers, and the drive to turn the spindle is applied at one end, torsional deflection between the drive end and the remote end is set up, and can become quite acute. In other words, the motor may have turned a considerable annular distance, twisting the spindle as it does, before the remote end of the spindle starts to turn. This phenomena is known as "wind-up" and when the entire spindle does begin to turn, there can often be set up torsional oscillations within the length of the spindle, leading to an unsatisfactory driving arrangement.

The present invention seeks to provide a scroll spindle assembly whereby these disadvantages are overcome.

In accordance with the invention, a scroll spindle comprises an outer sleeve of plastics material in or by which the threads of the scroll spindle are defined, and a central spine of a torsion resistant material such as steel, whereby such spindle arrangement can be used in a drive application enabling longer spindle lengths to be used.

Preferably, the spindle is made up of a number of similar sections, each comprising the outer plastic sleeve, and a central tubular spine of steel, the tubular spine of steel having at one end a coupling rod disposed therein, which coupling rod overhangs the end of the steel tube, and the steel tube in turn overhangs the plastic sleeve at one end of the plastic sleeve, and at the other end, the plastic sleeve overhangs the steel tube, whereby the sections can be plugged together and the parts thereof prevented from rotating relatively by passing pins through the overlapping portions of adjacent sections.

The threads in the plastic sleeve may be formed by machining or moulding by any other method.

Such an arrangement provides that long length scroll spindles can be constructed which do not suffer from the wind-up and torsional oscillation disadvantages as described above.

One embodiment of the invention will now be described, by way of example, with reference to the accompanying drawings, wherein:-

Fig. 1 is a perspective view of a feed scroll spindle assembly;

Fig. 2 is a sectional elevation of the spindle of the assembly shown in Fig. 1, in order to show several sections thereof, and how the sections are interfitted; and

Fig. 3 is a sectional elevation of the assembly shown in Fig. 1, the assembly being taken on the line III -III in Fig. 1.

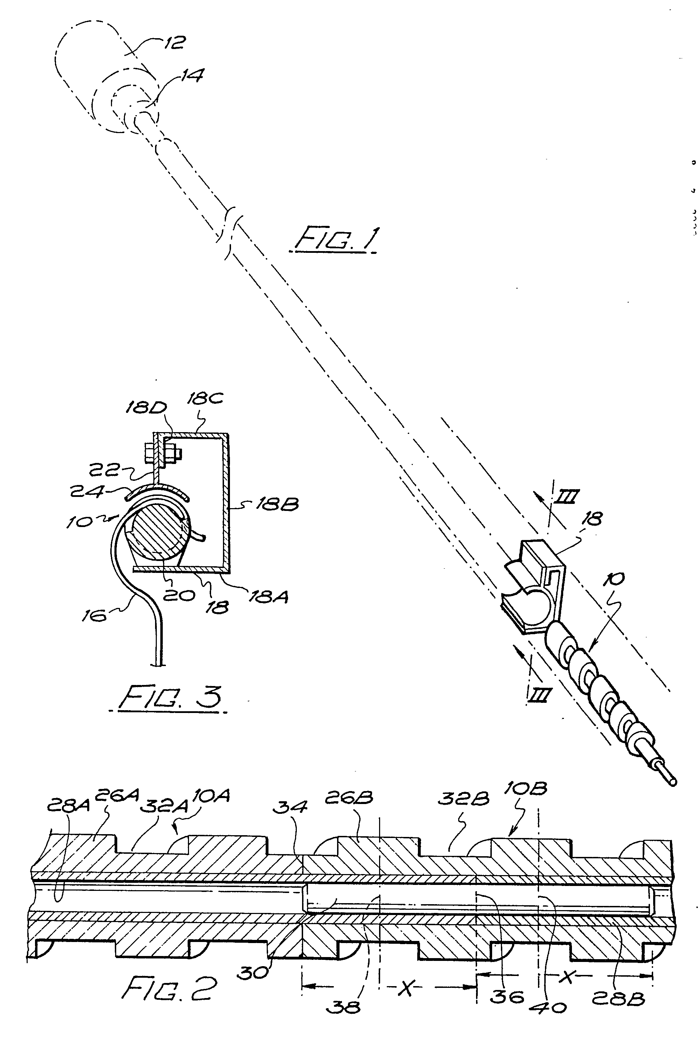

Referring to the drawings, in Fig. 1 there is indicated a scroll spindle 10 of substantial length i.e. of the order of 10 m or more, and it is adapted to be rotated by means of a motor 12 through a slipping clutch 14 to ensure that the motor will slip relative to the spindle in the event that the spindle for example becomes trapped or jammed.

The spindle 10 is either as shown in Fig. 3, for supporting garment hangers 16 or the like, or for driving hangers or the like along a support rail and the spindle is supported by means of a profiled bar 18 of the cross section shown in Fig. 2 comprising a base portion 18A, a rear wall portion 18B, a top portion 18C and a down turned flange 18D. Mounted on the inside of the base are a plurality of plastic support cradles 20 on which the spindle simply seats for the rotational support of same, whilst attached to the down turned flange 18D are guards 22 which although provided with a portion 24 curved to the shape of the spindle, do not in fact contact the spindle, these guards simply being provided to prevent the spindle from displacing too far from the bearings 20.

The profiled support bar 18 is open at one side as shown in Fig. 3 in order to permit the hanger 16 to be supported and transported by the spindle.

The spindle is made up of a number of interconnected sections e.g. of the order of 2 m long, and Fig. 2 illustrates how the spindle sections are connected. In the figure the ends of two spindle sections 10A and 10B are shown, each section comprising an outer plastic sleeve 26A, 26B in which is provided a rigidifying spine 28A, 28B of mild steel or the like which enhances the torsional rigidity of the section, and finally a coupling rod 30 is provided for coupling the section ends. The sleeves 26A, 26B are as shown provided with scroll grooves 32A, 32B, and the sections must be mated together at the zone 34 so that the scroll groove 32A forms a smooth continuation of scroll groove 32B. At the end of the section 10A, the rigidifying steel tube 28A overhangs the end of the sleeve 26A by the distance X as shown, and the rod 30 overhangs the end of the rigidifying tube 28A also by the amount X. As regards the section 10B, the end which is coupled to the end of section 10A is arranged so that the rigidifying tube 28B is located inside the sleeve 26B so that the sleeve in fact overhangs the rigidifying spine 28B by the amount X so that in fact when the two sections are coupled as shown in Fig. 2, the sleeves 26A and 26B abut in region 34 which is displaced by the distance X from the region 36 where the reinforcing spines 28A and 28B abut, and the coupling rod 30 extends by an amount X to each side of the region 36. To secure the sections one relative to another, pins or screws or the like are passed through the overlapping portions in the positions indicated by the dotted lines and the reference numerals 38 and 40. These pins may be for example split pins.

The resulting scroll spindle has high torsional rigidity, and therefore will not be subjected to the same degree of wind-up as is a conventional all plastic scroll spindle. The pitching of the threads on the scroll spindle can be varied to suit the particular use to which the spindle is to be put.

The plastics material of the sleeve sections 26A and 26B may be any suitable, but we have found that hard wearing nylon is particularly suitable.

## Claims

1. A scroll spindle comprises an outer sleeve of plastics material in or by which the threads of the scroll spindle are defined, and a central spine of a torsion resistant material such as steel, whereby such spindle arrangement can be used in a drive application enabling longer spindle lengths to be used.

2. A scroll spindle according to Claim 1, wherein the spindle is made up of a number of similar sections, each comprising the outer plastic sleeve, and a central tubular spine of steel.

3. A scroll spindle according to Claim 2, wherein the tubular spine of steel has at one end a coupling rod disposed therein, which coupling rod overhangs the end of the steel tube, and the steel tube in turn overhangs the plastic sleeve at one end of the plastic sleeve, and at the other end, the plastic sleeve overhangs the steel tube.

_FIG.1_

_FIG.3_

_FIG.2_

| | DOCUMENTS CONSIDERED TO BE RELEVANT | | EP 88112856.5 |
|---|---|---|---|
| Category | Citation of document with indication, where appropriate, of relevant passages | Relevant to claim | CLASSIFICATION OF THE APPLICATION (Int. Cl.4) |
| Y | US - A - 3 844 406 (KORNYLAK)<br>  * Fig. 1; column 3, lines 45-51 * | 1,2 | B 65 G 33/02<br>B 65 G 33/26//<br>B 65 G 23/20 |
| Y | DE - U - 7 507 855 (MEUSER)<br>  * Fig. 1; page 3, lines 7,8 * | 1,2 | |
| A | GB - A - 2 188 017 (STOCKRAIL)<br>  * Fig. 2 * | 1 | |
| A | DE - A - 1 525 201 (NYDQVIST)<br>  * Claims * | 3 | |
| A | US - A - 3 705 644 (KAWCHITCH)<br>  * Fig. 2,3 * | 3 | TECHNICAL FIELDS SEARCHED (Int. Cl.4)<br><br>A 47 F<br>B 65 G<br>F 16 H |

The present search report has been drawn up for all claims

| Place of search | Date of completion of the search | Examiner |
|---|---|---|
| VIENNA | 07-12-1988 | BAUMGARTNER |